Europäisches Patentamt

(19) European Patent Office

Office européen des brevets

(11) Numéro de publication : **0 024 236**
**B1**

(12) **FASCICULE DE BREVET EUROPÉEN**

(45) Date de publication du fascicule du brevet :
14.09.83

(51) Int. Cl.³ : **H 04 L 25/49**

(21) Numéro de dépôt : **80401159.1**

(22) Date de dépôt : **06.08.80**

(54) **Procédé de transcodage d'informations pour transmission sur ligne et système de transmission l'utilisant.**

(30) Priorité : **06.08.79 FR 7920063**

(43) Date de publication de la demande :
**25.02.81 Bulletin 81/08**

(45) Mention de la délivrance du brevet :
**14.09.83 Bulletin 83/37**

(84) Etats contractants désignés :
**CH DE GB LI NL SE**

(56) Documents cités :
**US A 3 215 779**
**US A 3 302 193**
**US A 3 587 088**
**US A 4 092 595**

**ELECTRONICS LETTERS, vol. 12, n° 18, 2 septembre 1976 LONDRES (GB) M. ROUSSEAU :
«Black Codes for Optical-Fibre Communication»,
pages 478 et 479**

**IEEE 1975 ICC INTERNATIONAL CONFERENCE
ON COMMUNICATIONS, San Francisco, 16-
18 juin 1975, IEEE, NEW YORK (US) Y. TAKASAKI
et al. : « Line Coding Plans for Fiber Optic
Communication Systems », pages 32-20 à 32-24**

**ALTA FREQUENZA, vol. 47, n° 7, juillet 1978
MILANO (IT) G. PALADIN et al. : « Error Probability in Optical Fiber Digital Transmission Systems with Correlated Signals », pages 537-545**

(73) Titulaire : **LIGNES TELEGRAPHIQUES ET TELEPHO-
NIQUES L.T.T.**
**1, rue Charles Bourseul**
**F-78702 Conflans Ste Honorine (FR)**

(72) Inventeur : **Auzet, Christian**
**"THOMSON-CSF" SCPI 173 bld Haussmann**
**F-75360 Paris Cedex 08 (FR)**

(74) Mandataire : **Benoit, Monique et al**
**THOMSON-CSF SCPI 173, Bld Haussmann**
**F-75379 Paris Cedex 08 (FR)**

Jouve, 18, rue St-Denis, 75001 Paris, France

# 0 024 236

Procédé de transcodage d'informations pour transmission sur ligne et système
de transmission l'utilisant

La présente invention se rapporte au domaine du transcodage d'informations et elle a plus particulièrement pour objet un procédé de transformation d'un flux d'informations, binaires par exemple, en un flux d'impulsions mieux adapté aux milieux de transmission usuels (câble à conducteur métallique, câble à fibres optiques, etc.).

L'invention a également pour objet un système de transmission permettant la mise en œuvre de ce procédé.

Le problème posé par un tel transcodage a fait l'objet de nombreuses études, parmi lesquelles on peut citer à titre d'exemple l'article de J. VALIN, paru dans la revue technique THOMSON-CSF, (volume II n° 2 juin 1979 page 359) ; il en ressort notamment que les caractéristiques recherchées pour un code sont: la minimisation de la bande passante normalement nécessaire pour transmettre correctement le signal ; la suppression de la composante continue, de façon à permettre la simplification de certains éléments du système de transmission ; la possibilité de disposer d'un processus autosynchronisant, permettant d'éviter l'adjonction d'un canal particulier pour la transmission de signaux de synchronisation, et la détection intrinsèque des erreurs de transmission. On connaît en particulier un certain nombre de codes complexes, décrits notamment dans l'article précité, tels que les codes ternaires, quaternaires, etc., pour lesquels le nombre de combinaisons possibles est supérieur à celui du code, par exemple binaire, de départ. Cette redondance permet de définir plusieurs alphabets, c'est-à-dire qu'à chaque valeur possible du code de départ il correspond plusieurs valeurs du code complexe.

On appelle loi de codage la loi permettant de choisir pour chaque valeur du code de départ celui des alphabets qui sera utilisé, en fonction des critères qui tiennent compte de l'ensemble du message déjà transmis : ce critère est la somme numérique courante, dont on rappelle qu'elle est la somme des valeurs des symboles du code entre l'instant choisi comme origine de l'émission et un instant quelconque. Or, il est connu que le bornage de la somme numérique permet notamment d'éliminer la composante continue du signal transmis : la loi de codage règle donc en général le passage d'un alphabet à l'autre en vue de diminuer la somme numérique courante.

La présente invention a pour but la réduction de la largeur du spectre de fréquence utilisé pour la transmission des informations par rapport à celle des codes usuels. Cela est réalisé par le bornage de la somme alternée, c'est-à-dire la somme des valeurs des symboles de rang pair diminuée de la somme des symboles de rang impair d'un même code, entre l'instant choisi comme origine de l'émission et un instant quelconque.

A cet effet, l'invention a pour objet un procédé de transcodage d'une information exprimée selon un premier code, à transmettre sur une voie de transmission selon un second code, et comportant les phases suivantes :

au codage

— récupération du rythme de l'information exprimée selon le premier code ;
— élaboration d'un rythme correspondant au second code, dit « rythme de code » ;
— transformation du premier codage en second codage par le choix d'un parmi plusieurs alphabets susceptibles d'assurer une telle transformation, ce choix étant effectué en fonction de la valeur de la somme numérique et de la valeur de la somme alternée, qui doivent rester bornées ;
— émission à une extrémité de la voie de transmission de l'information exprimée selon le second codage, au rythme de code ;

au décodage

— récupération du rythme de code à partir de l'information reçue ;
— élaboration du rythme correspondant au premier code ;
— découpage de l'information reçue en mots constitués d'un nombre prédéfini de symboles ;
— comparaison de ces mots avec un ensemble prédéfini de mots interdits ;
— mise en phase dudit découpage à partir de la comparaison précédente ;
— transformation du second codage en premier codage.

L'invention a également pour objet un système de transmission d'informations permettant la mise en œuvre du procédé ci-dessus et comporte à cet effet un module d'émission et un module de réception placés de part et d'autre d'une ligne de transmission.

D'autres objets, caractéristiques et résultats de l'invention ressortiront de la description suivante, donnée à titre d'exemple non limitatif et illustrée par les dessins annexés, où :

la figure 1 est un diagramme des temps d'un premier transcodage selon l'invention ;

les figures 2 et 3 sont des schémas d'un mode de réalisation d'un codeur et d'un décodeur correspondant à l'exemple de la figure 1 ;

la figure 4 est un diagramme de comparaison des densités spectrales du code de la figure 1 et du code AMI ;

les figures 5, 6 et 7 sont des diagrammes des temps de trois autres transcodages selon l'invention ;
la figure 8 est un diagramme des densités spectrales des trois codes des figures 5, 6 et 7 ;
la figure 9 est un diagramme des temps d'un cinquième transcodage selon l'invention ;
les figures 10 et 11 sont des schémas d'un mode de réalisation d'un codeur et d'un décodeur correspondant à l'exemple de la figure 9 ;
la figure 12 est un diagramme de comparaison du code de la figure 9 et d'un code connu.

La première mise en œuvre de l'invention utilise un transcodage particulier du type dit 1B/2T, dans lequel l'information à transmettre est exprimée sous forme binaire et l'information transcodée, émise sur la voie de transmission, est exprimée sous forme de mots de deux symboles ternaires, c'est-à-dire pouvant prendre une parmi trois valeurs, représentées habituellement par les symboles : « O », « + » et « — ».

Le tableau ci-dessous donne un exemple d'un tel codage à quatre alphabets, c'est-à-dire que pour chaque bit, la correspondance se fait en prenant un parmi quatre mots ternaires de deux caractères, selon les critères suivants :

— la variation maximale de la somme courante (notée B) doit être égale à 3 ;

— la variation maximale de la somme alternée (notée B') doit être égale à 1, ce qui donne $B + B' \leqslant 4$ ;

— le nombre de mots interdits est de trois.

Tableau 1

| symbole binaire | mot ternaire | rang de l'alphabet ternaire | mot interdit |
|---|---|---|---|
| | + + | 1 | |
| O | O — | 2 | O O |
| | O + | 3 | + — |
| | — — | 4 | — + |
| | + O | 1 | |
| 1 | + O | 2 | |
| | — O | 3 | |
| | — O | 4 | |

Ce code est dit 1B/2T 4E 3S1 3M, où 3 et 1 sont les bornes des variations des sommes courante et alternée et 3M signifie qu'il comporte trois mots interdits.

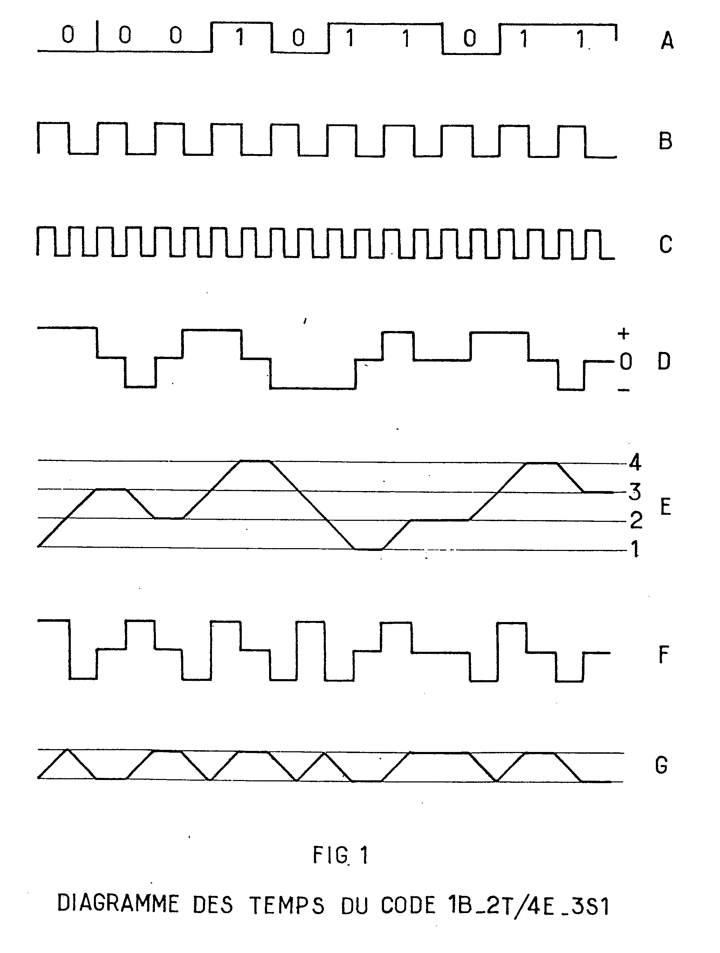

On a représenté sur les diagrammes de la figure 1, respectivement en A le signal binaire portant l'information à transmettre, en B le signal d'horloge définissant le rythme du signal binaire, en C le signal d'horloge définissant le rythme du signal transcodé ; ce signal C est à fréquence double du signal B. Le diagramme D respésente le signal transcodé correspondant à l'information A en utilisant l'alphabet du tableau 1 et une logique interne du codeur explicitée plus loin. Ainsi qu'il apparaît, chacun des symboles binaires de l'information peut être associé à un mot ternaire de deux symboles choisi parmi quatre mots possibles. Le diagramme E, intégrale du diagramme D, représente les variations de la somme numérique. Elle est limitée à 3 = B. Le diagramme F se déduit du diagramme D en changeant le signe du deuxième symbole de chaque mot ternaire et permet de calculer la somme alternée. Le diagramme G, intégrale du diagramme F, représente les variations de la somme alternée. Le diagramme G est limité à 1 = B'.

Dans cet exemple, le choix de l'alphabet est effectué d'après la valeur du signal E en fin de mot ternaire, suivant la loi du tableau 2.

Tableau 2

| Valeur de E en fin de mot | : | Alphabet choisi |
|---|---|---|
| 1 | : | 1 |
| 2 | : | 3 |
| 3 | : | 2 |
| 4 | : | 4 |
| | : | |

En fin de mot, la valeur de E détermine en effet celle de G de la manière suivante :

Tableau 3

| Valeur de E en fin de mot | : | Valeur de G en fin de mot |
|---|---|---|
| 1 | : | O |
| 2 | : | O |
| 3 | : | 1 |
| 4 | : | 1 |
| | : | |

D'une manière plus générale, les états internes du codeur ne sont autres que la représentation conventionnelle des couples de valeurs possibles des courbes E et G en fin de mot transcodé. Le coefficient multiplicatif d'erreur de ce code est 0,59.

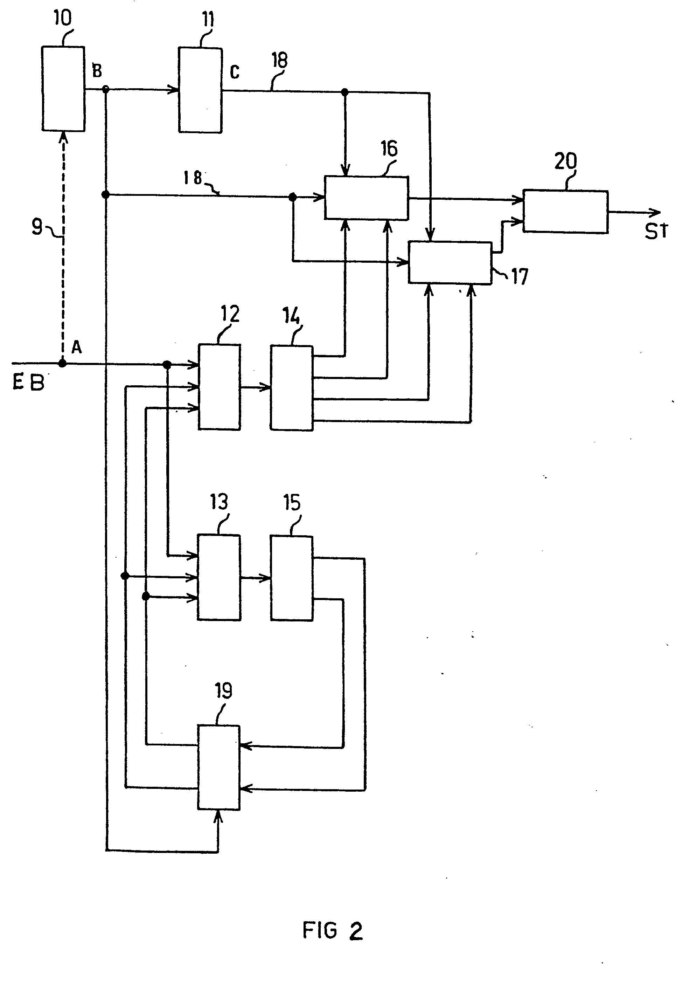

La figure 2 est un bloc diagramme du codeur utilisé dans l'exemple précédent.

On a représenté en EB l'entrée du codeur à laquelle est appliquée l'information binaire à transmettre (diagramme A de la figure 1) et en ST la borne de sortie sur laquelle est délivré le signal ternaire destiné à la transmission sur la ligne (diagramme D). On a représenté en 10 une horloge restituant la fréquence de rythme de l'information binaire d'entrée. Cette horloge peut être synchronisée par le signal lui-même, ainsi qu'il est représenté par la ligne interrompue 9, ou par tout autre moyen extérieur. L'horloge 10 délivre le signal représenté par le diagramme B de la figure 1 ; elle alimente un multiplicateur binaire 11 assurant une multiplication par deux. Le signal de sortie du multiplicateur 11 correspond au diagramme C de la figure 1. Le signal d'entrée est appliqué en parallèle sur l'une des bornes de chacun de deux circuits générateurs d'adresse, respectivement 12 et 13, associés respectivement à des mémoires mortes 14 et 15. Dans la mémoire 14 sont enregistrés les mots-code permis des alphabets tels que définis sur le tableau 1. Le mot-code sélectionné est transmis par l'intermédiaire de registres parallèle-série 16 et 17 et d'un circuit de sommation 20 à la sortie ST. Ainsi qu'il est représenté par les connexions 18-18', les registres 16 et 17 sont synchronisés respectivement par l'horloge 10 et le circuit 11 à l'enregistrement et à la lecture. Dans la mémoire 15 sont enregistrés les signaux de commande des générateurs d'adresse 12 et 13, appliqués à ceux-ci par l'intermédiaire du circuit à retard 19 qui introduit un retard égal à la durée d'un mot-code. Ces signaux commandent le choix du mot-code utilisé parmi les quatre alphabets définis au tableau 1, compte tenu du mot-code qui vient immédiatement d'être transmis, afin que la condition $B + B' \leq 4$ à laquelle obéit le code soit respectée. Elle constitue ce qui a été désigné ci-dessus par « logique interne » du codeur. Cette logique interne est définie par les tableaux 2 et 3.

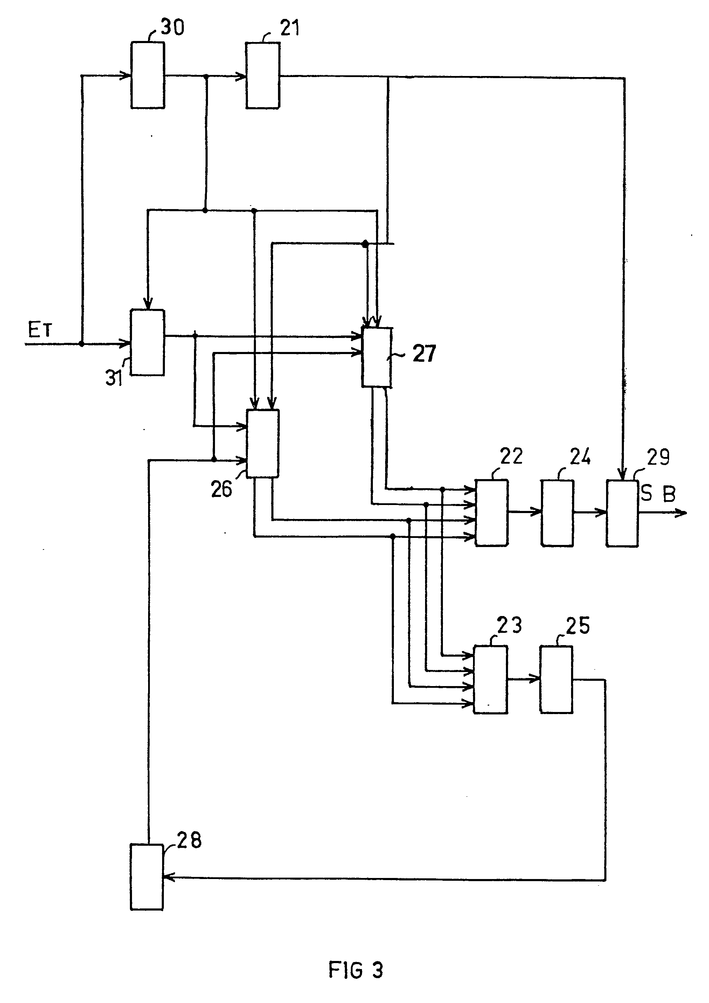

La figure 3 est un bloc diagramme du décodeur correspondant au codeur de la figure 2.

On a représenté en ET l'entrée du décodeur reliée à la ligne de transmission, recevant le signal ternaire transmis. La fréquence de rythme de ce signal est reconstituée dans l'horloge 30 qui alimente d'une part un régénérateur 31 et, d'autre part, un circuit diviseur de fréquence 21 restituant le rythme de l'information binaire. Le régénérateur 31 comporte notamment, ainsi qu'il est bien connu, des circuits

4

d'égalisation et d'amplification du signal reçu. Sa réalisation n'est pas modifiée par le procédé de codage selon l'invention. Le signal ternaire amplifié est appliqué à des registres 26 et 27 série-parallèle, synchronisés par le circuit 21 et l'horloge 30 de façon à restituer le découpage en mots ternaires de deux symboles. Ces mots sont appliqués à un ensemble de deux générateurs d'adresse, 22 et 23 associés à deux mémoires mortes, respectivement 24 et 25. La mémoire 24 délivre (sortie SB) l'information binaire correspondant au mot appliqué au générateur 22, par l'intermédiaire d'un circuit de mise en forme 29 synchronisé par l'horloge 21, cette mise en forme étant faite par échantillonnage. Le générateur d'adresse 23 alimente la mémoire morte 25 de reconnaissance des mots interdits qui, par l'intermédiaire du circuit de synchronisation 28, commande les registres 26 et 27. En effet, des mots comportant deux symboles sont découpés dans la suite ternaire continue transmise par la ligne ; l'information de sortie des registres 26 et 27 est un mot ternaire de deux symboles qui peuvent soit appartenir à deux mots successifs, soit au même mot. Dans le premier cas, les mots formés correspondent à des mots interdits qui, par l'intermédiaire des éléments 23 et 25, commandent le circuit de synchronisation des registres 26 et 27, faisant avancer les registres d'un temps élémentaire. Dans le deuxième cas, lorsque le découpage est correct, les mots reconstitués par les registres appartiennent à un alphabet du code et correspondent à une information binaire transmise par l'ensemble 22, 24 et 29 à la sortie SB. Il est bien évident que l'accroissement du nombre de mots interdits facilite la synchronisation.

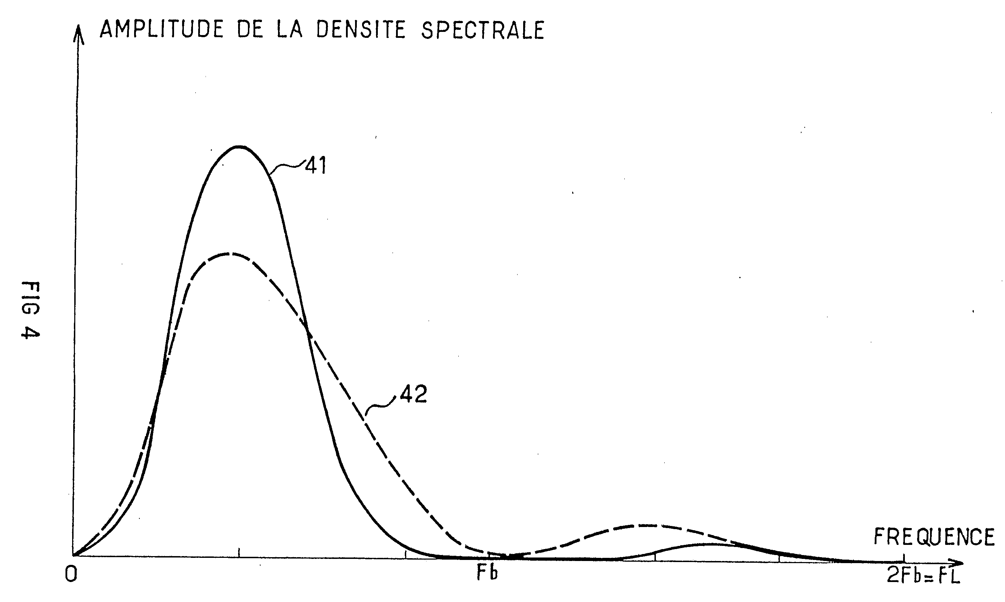

La figure 4 représente les densités spectrales, c'est-à-dire les réponses en amplitude pour un train binaire d'amplitude constante, d'une part du code qui vient d'être défini (trait continu 41) et à des fins de comparaison, le spectre de fréquence du code AMI (Alternate Mark Inversion) (trait interrompu 42).

On a représenté :
— en $F_b$ la fréquence binaire de l'information et la fréquence de ligne du code AMI ;
— en $F_L$ la fréquence de ligne dans le code de l'invention. On voit que le spectre (41) du code proposé est plus étroit que celui du code AMI, autour de la même fréquence centrale, et donc répond mieux aux conditions posées ci-dessus.

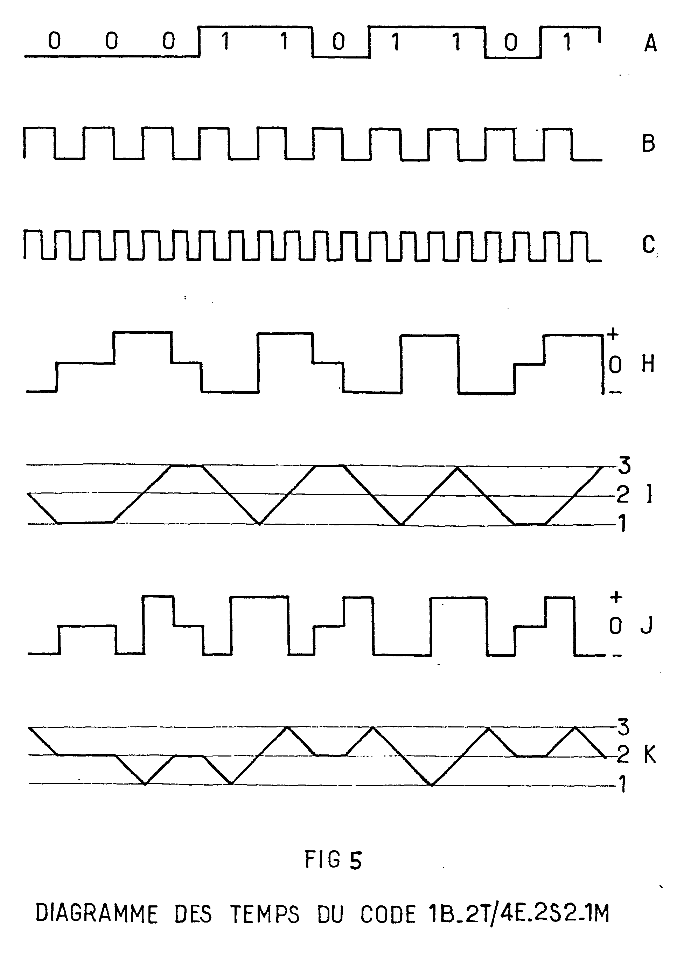

Les diagrammes de la figure 5 représentent les mêmes variables que les diagrammes de la figure 1 dans le cas d'un deuxième code selon l'invention. Ce code, désigné par 1B/2T 4 E 2S2 1M, se caractérise par :
— un rythme du code double du rythme binaire ;
— des mots code ternaires de deux symboles ;
— quatre alphabets définis par le tableau 4 ;
— une variation maximale des sommes courante et alternée égale à deux (diagrammes I et K) ;
— un mot interdit.

Tableau 4

| symbole binaire | : | mots ternaires permis | : | rang de l'alphabet | : | mot interdit |
|---|---|---|---|---|---|---|
| | : | − + | : | 1 | : | O O |
| 1 | : | − − | : | 2 | : | |
| | : | + − | : | 3 | : | |
| | : | + + | : | 4 | : | |
| | : | − O | : | 1 | : | |
| O | : | O − | : | 2 | : | |
| | : | + O | : | 3 | : | |
| | : | O + | : | 4 | : | |
| | : | | : | | : | |

A la suite binaire A correspond le code représenté par le diagramme H. Les diagrammes B et C représentent respectivement les rythmes des signaux binaire et ternaire. Le diagramme H représente le signal codé, le diagramme I l'intégrale de H. Le diagramme J est dérivé du diagramme H en inversant le deuxième symbole de chaque mot ternaire et le diagramme K est l'intégrale du diagramme J.

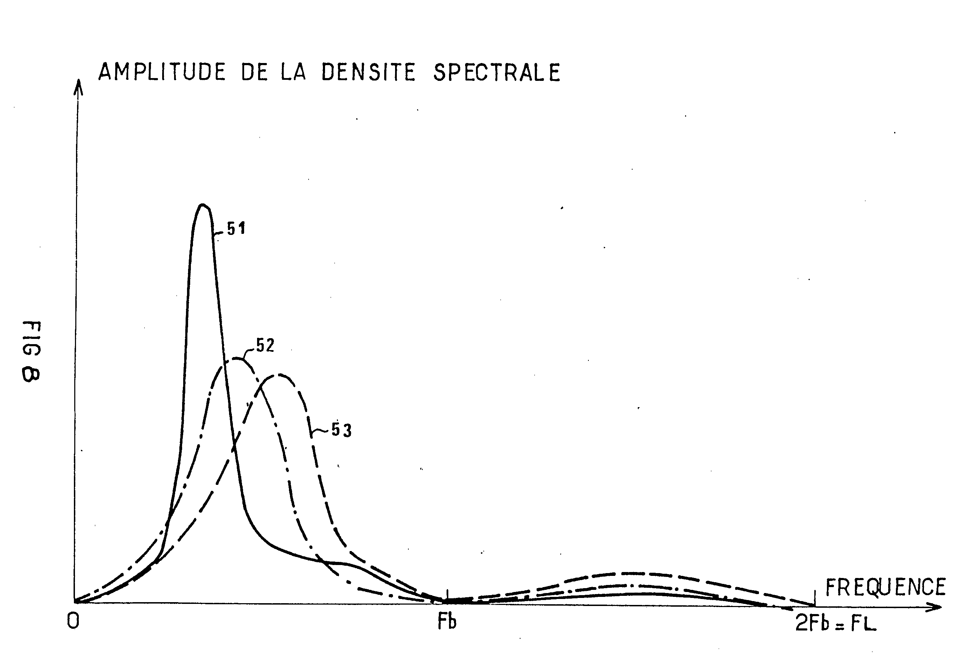

La répartition spectrale de ce code est représentée par la courbe 51 de la figure 8.

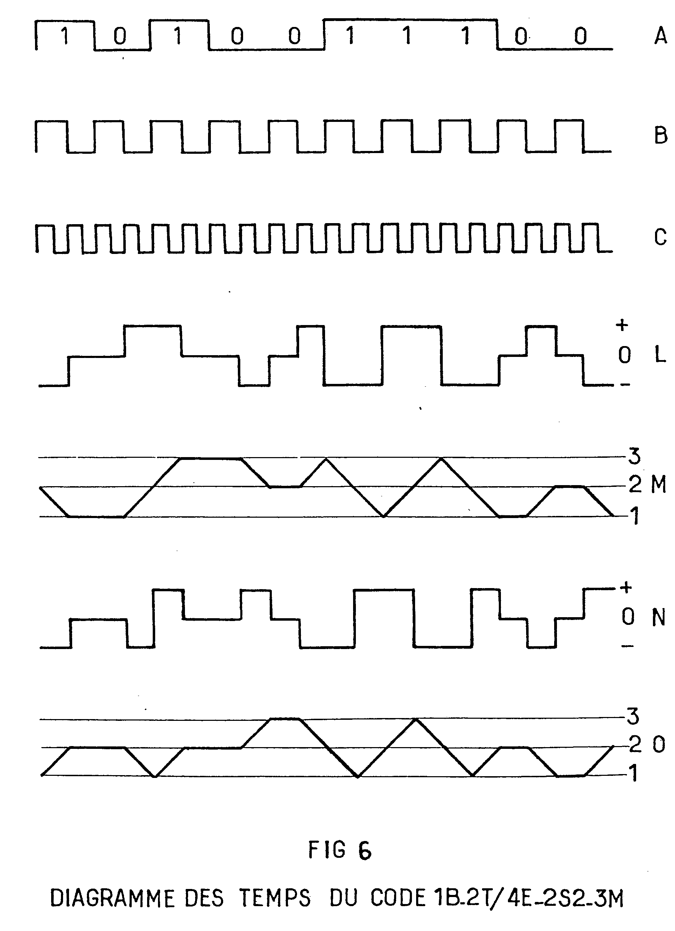

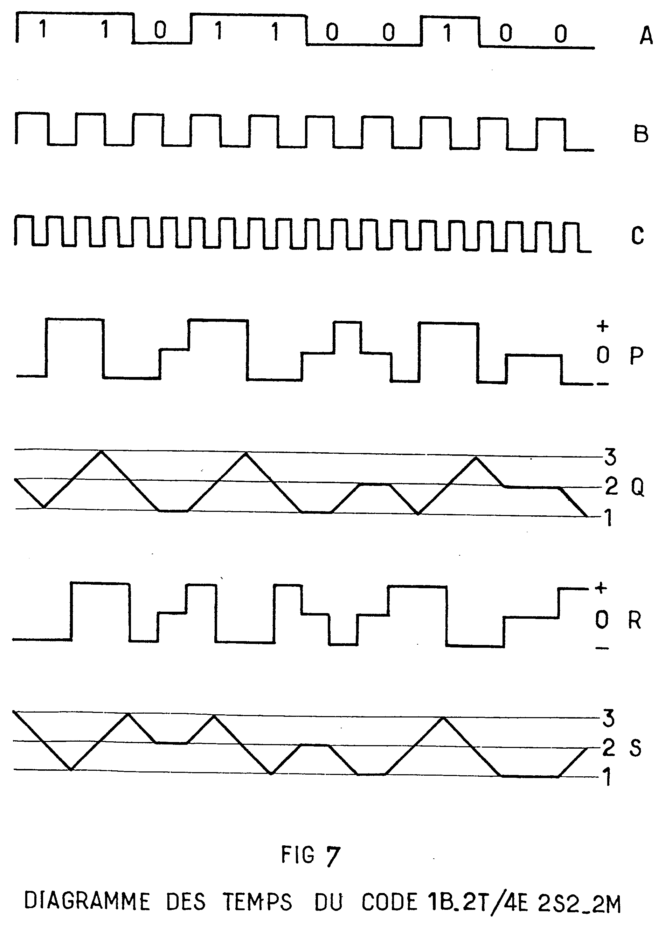

Les diagrammes des figures 6 et 7 représentent respectivement les mêmes variables pour deux autres codes selon l'invention, le code 1B/2T 4E 2S2 3M, différant du précédent par le nombre de mots interdits qui devient trois au lieu de un, et le code 1B/2T 4E 2S2 2M dans lequel le nombre de mots interdits est de deux.

Les alphabets sont représentés respectivement par les tableaux 5 et 6 et les densités spectrales de ces deux codes sont représentées respectivement par les courbes 52 et 53 de la figure 8.

Tableau 5

| symbole binaire | : | mots ternaires permis | : | rang de l'alphabet | : | mots interdits |
|---|---|---|---|---|---|---|
| | : | – O | : | 1 | : | O O |
| 1 | : | – – | : | 2 | : | + – |
| | : | + O | : | 3 | : | – + |
| | : | + + | : | 4 | : | |
| | : | O + | : | 1 | : | |
| O | : | O – | : | 2 | : | |
| | : | O – | : | 3 | : | |
| | : | O + | : | 4 | : | |
| | : | | : | | : | |

Tableau 6

| symbole binaire | : | mots ternaires permis | : | rang de l'alphabet | : | mots interdits |
|---|---|---|---|---|---|---|
| | : | – + | : | 1 | : | O O |
| 1 | : | – – | : | 2 | : | + O |
| | : | + – | : | 3 | : | |
| | : | + + | : | 4 | : | |
| | : | – O | : | 1 | : | |
| O | : | – O | : | 2 | : | |
| | : | O – | : | 3 | : | |
| | : | O + | : | 4 | : | |
| | : | | : | | : | |

**0 024 236**

De façon analogue à ce qui a été décrit ci-dessus pour des codes du type 1B/2T, l'invention est applicable plus généralement à des codes de type nB/mT, n et m étant des entiers quelconques.

A titre d'exemple, il a été élaboré un code 3B/4T comportant 4 états internes du codeur, caractérisés chacun par une valeur du couple somme numérique-somme alternée comme indiqué plus haut, avec B = B' = 2. Dans d'autres modes de réalisation, il a été élaboré un code 4B/4T à 6 états internes, avec B = B' = 3, et un code 5B/4T à 8 états internes, avec B = 8 et B' = 5.

De façon encore plus générale, l'invention n'est pas limitée au transcodage de binaire en ternaire, mais s'applique également au transcodage binaire-binaire, du type dit nB/mB.

A titre d'exemple, on décrit ci-après un code de type 3B/4B, dit 3B/4B 4E 6S6 OM, comportant quatre alphabets, pour lesquels la variation maximale de la somme numérique (B) et de la somme alternée (B') est égale à 6, et ne présentant aucun mot interdit, ce qui donne un meilleur rendement pour le code mais complique le décodage, ainsi qu'il est connu.

La table de conversion est reproduite sur le tableau 7 pour le codage et le tableau 2 pour le décodage. La logique interne du codeur est définie par la dernière colonne de droite du tableau 7 qui fixe le rang de l'alphabet à utiliser au codage du mot suivant. Les signes + et − figurant sur ces tableaux correspondant aux valeurs 1 et 0 affectées aux deux symboles binaires.

Tableau 7

| mot binaire d'entrée | : | rang de l'alphabet | : | : | mot binaire codé | : | rang de l'alphabet du mot suivant |
|---|---|---|---|---|---|---|---|
| O  O  O | : | 1 | : | + + + − | : | 2 |
|  | : | 2 | : | − + − − | : | 1 |
|  | : | 3 | : | − + − − | : | 4 |
|  | : | 4 | : | + + + − | : | 3 |
| O  O  1 | : | 1 | : | + − − − | : | 4 |
|  | : | 2 | : | + − − − | : | 3 |
|  | : | 3 | : | + + − + | : | 2 |
|  | : | 4 | : | + + − + | : | 1 |
| O  1  O | : | 1 | : | + + − − | : | 1 |
|  | : | 2 | : | − − − − | : | 4 |
|  | : | 3 | : | + + − − | : | 3 |
|  | : | 4 | : | + + − − | : | 4 |
| O  1  1 | : | 1 | : | − − + + | : | 1 |
|  | : | 2 | : | − − + + | : | 2 |
|  | : | 3 | : | − − + + | : | 3 |
|  | : | 4 | : | + + + + | : | 2 |
| 1  O  O | : | 1 | : | + − + − | : | 3 |
|  | : | 2 | : | − + + − | : | 2 |
|  | : | 3 | : | − + + − | : | 3 |
|  | : | 4 | : | − + + − | : | 4 |
| 1  O  1 | : | 1 | : | + − − + | : | 1 |
|  | : | 2 | : | + − − + | : | 2 |
|  | : | 3 | : | − + − + | : | 1 |
|  | : | 4 | : | + − − + | : | 4 |
| 1  1  O | : | 1 | : | − − + − | : | 4 |
|  | : | 2 | : | − − + − | : | 3 |
|  | : | 3 | : | − + + + | : | 2 |
| 1  1  1 | : | 1 | : | + − + + | : | 2 |
|  | : | 2 | : | − − − + | : | 1 |
|  | : | 3 | : | − − − + | : | 4 |
|  | : | 4 | : | + − + + | : | 3 |

CODAGE : CODE     3B/4B  4E  6S6  OM

7

# 0 024 236

Tableau 8

|  | mot binaire codé | : | mot décodé |
|---|---|---|---|
| — — — — | : | O 1 O |
| — — — + | : | 1 1 1 |
| — — + — | : | 1 1 O |
| — — + + | : | O 1 1 |
| — + — — | : | O O O |
| — + — + | : | 1 O 1 |
| — + + — | : | 1 O O |
| — + + + | : | 1 1 O |
| + — — — | : | O O 1 |
| + — — + | : | 1 O 1 |
| + — + — | : | 1 O O |
| + — + + | : | 1 1 1 |
| + + — — | : | O 1 O |
| + + — + | : | C O 1 |
| + + + — | : | C O C |
| + + + + | : | O 1 1 |

DECODAGE : CODE   3B/4B 4E 6S6 OM

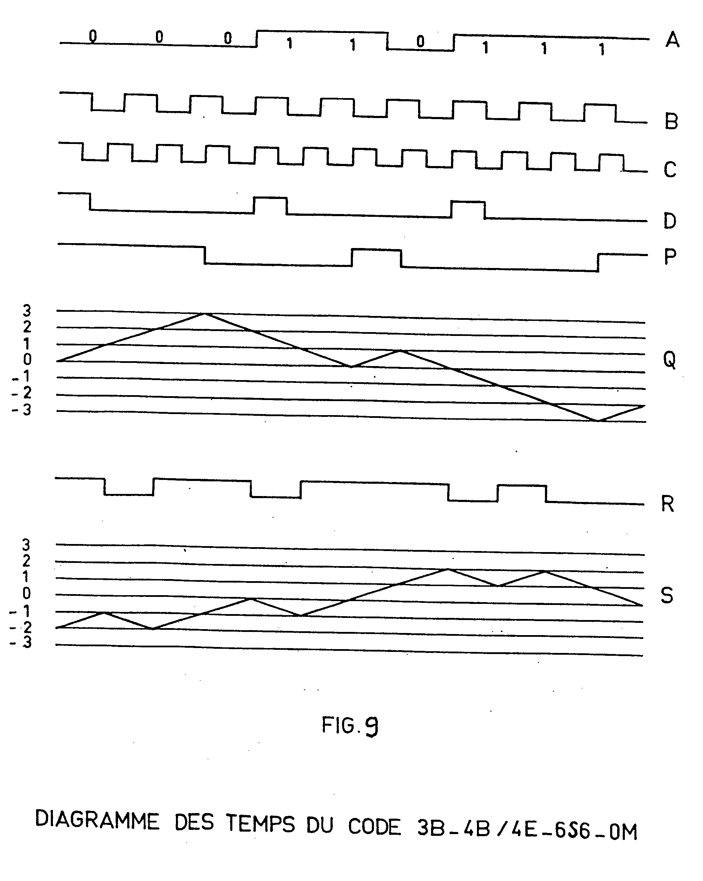

On a représenté par les diagrammes de la figure 9, respectivement en A le signal binaire d'entrée, en B le signal d'horloge définissant le rythme du flux binaire d'entrée, en C le signal d'horloge définissant le rythme du flux transcodé, qui est à fréquence 4/3 du signal B. Le diagramme D représente un signal de synchronisation commun aux horloges B et C. Le diagramme P représente le signal codé correspondant à l'information A en utilisant les alphabets du tableau 7 et la logique interne du codeur explicitée sur la dernière colonne de droite. Ainsi qu'il apparaît, chacun des huit mots binaires de trois symboles du flux binaire à coder est associé à un mot binaire de quatre symboles choisi parmi quatre alphabets possibles. Le choix de l'alphabet utilisé est effectué, à partir du mot-code précédemment utilisé, pour tenir compte des conditions imposées aux variations de la somme numériques et de la somme alternée. Ce choix est effectué, par exemple, en sélectionnant le mot code à utiliser par l'adresse de celui-ci dans une mémoire morte grâce à un circuit logique dont la réalisation est à la portée de l'homme de l'art. Le diagramme Q, intégrale du diagramme P, représente les variations de la somme numérique. Elle est limitée à B = 6. Le diagramme R se déduit du diagramme P en changeant le signe du deuxième symbole de chaque mot transcodé et permet de calculer la somme alternée. Le diagramme S, intégrale du diagramme R, représente les variations de la somme alternée. Le diagramme S est limité à 6 = B'.

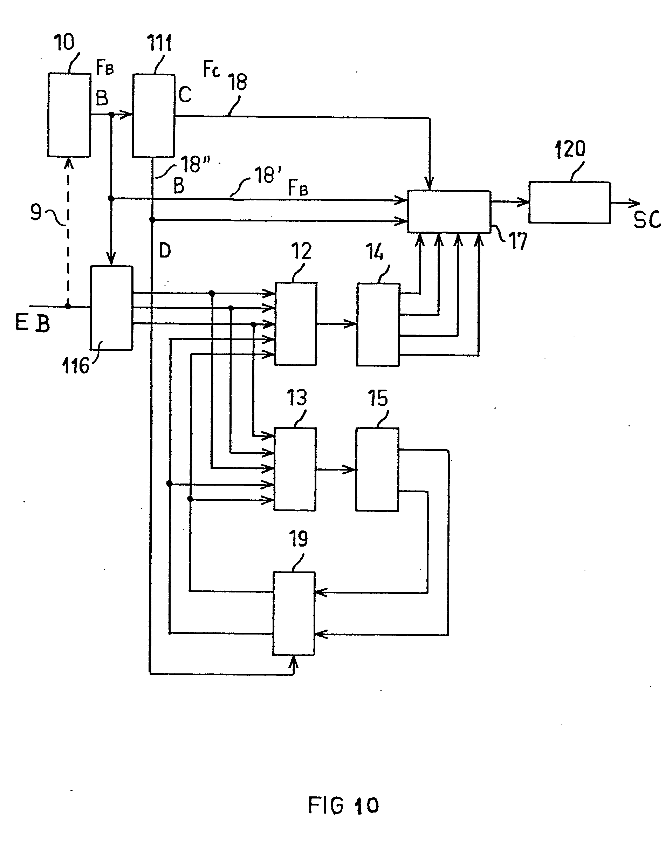

La figure 10 est un bloc diagramme du codeur analogue à celui de la figure 2 mais adapté à l'exemple ci-dessus.

On a représenté en EB l'entrée du codeur à laquelle est appliqué le flux binaire d'entrée à transcoder (diagramme A de la figure 9) et en SC la borne de sortie sur laquelle est délivré le flux binaire transcodé au rythme 4/3 du rythme du flux binaire d'entrée, destiné à la transmission sur la ligne (diagramme P). On a représenté en 10 l'horloge restituant la fréquence de rythme du flux binaire d'entrée. Cette horloge peut être synchronisée par le signal lui-même, ainsi qu'il est représenté par la ligne interrompue 9, ou par tout

8

0 024 236

autre moyen extérieur. L'horloge 10 délivre le signal représenté par le diagramme B de la figure 9. Ce signal est transmis par le conducteur 18′ au registre parallèle-série 17 ainsi qu'à un registre série-parallèle 116. L'horloge 10 alimente un multiplicateur binaire 111 assurant une multiplication par 4/3. Le signal de sortie du multiplicateur 111, transmis par le conducteur 18 au registre 17, correspond au diagramme C de la figure 9. Le multiplicateur 111 délivre par un conducteur 18″ un signal de découpage du flux binaire d'entrée EB en mots de trois symboles (diagramme D de la figure 9). Ce signal de découpage ou synchronisation de mots est appliqué au registre 17. Le signal de synchronisation de mots est également appliqué au circuit à retard 19. Le flux d'entrée EB est transformé, dans le registre série-parallèle 116 alimentant en parallèle les deux circuits générateurs d'adresse, respectivement 12 et 13, associés respectivement aux mémoires mortes 14 et 15 en une série de mots de trois symboles. Dans la mémoire 14 sont enregistrés les alphabets de mots-code tels que définis par exemple au tableau 7. Le mot-code sélectionné est transmis par l'intermédiaire du registre parallèle-série 17 et d'un circuit de mise en forme 120 à la sortie SC. Dans la mémoire 15 sont enregistrés les signaux de commande des générateurs d'adresse 12 et 13 appliqués à ceux-ci par l'intermédiaire du circuit à retard 19 introduisant un retard égal à la durée d'un mot-code. Ces signaux commandent le rang de l'alphabet qui doit être utilisé au codage du mot suivant, compte tenu du mot-code qui vient d'être transmis afin que la condition B = 6 et B′ = 6 à laquelle obéit le code soit respectée. Ces circuits assurent la sélection de l'alphabet selon la loi figurant à la dernière colonne de droite du tableau 7 et constituent la « logique interne » du codeur. Le circuit 19 reçoit le signal de synchronisation de mot (D figure 9) pour respecter la mise en phase du découpage.

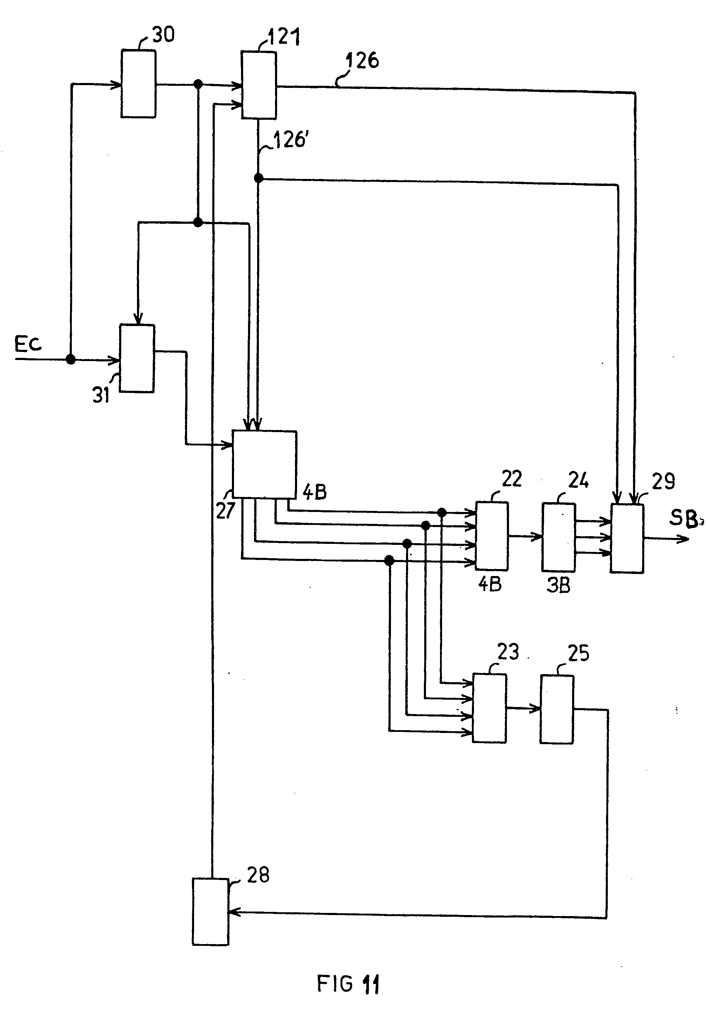

La figure 11 est un bloc diagramme du décodeur analogue à celui de la figure 3 mais correspondant au codeur de la figure 10.

On a représenté en EC l'entrée du décodeur, reliée à la ligne de transmission recevant le flux binaire transcodé. La fréquence de rythme de ce signal de ligne est reconstituée dans l'horloge 30 qui alimente d'une part le régénérateur 31 et, d'autre part, un circuit diviseur de fréquence par 3/4, 121, restituant le rythme du flux binaire sur la sortie alimentant un conducteur 126 et le rythme des mots 1/4 du rythme en ligne) sur la sortie alimentant un conducteur 126′. Le régénérateur 31 comporte notamment des circuits d'égalisation et d'amplification du signal de ligne. Le flux binaire transcodé régénéré est appliqué au registre 27 série-parallèle synchronisé par les éléments 121 et 30 de façon à reconstituer les mots-code de quatre symboles. Ces mots-code sont appliqués aux deux générateurs d'adresse 22 et 23 associés aux deux mémoires mortes 24 et 25. La mémoire 24 délivre à la sortie SB le mot binaire de trois symboles correspondant au mot-code appliqué en 22, suivant la correspondance figurant par exemple au tableau 8, par l'intermédiaire d'un circuit de mise en forme 29 synchronisé par l'horloge 21 de rythme du flux binaire, cette mise en forme étant faite par échantillonnage. Le générateur d'adresse 23 alimente la mémoire 25 de décodage d'informations nécessaires à la récupération de synchronisation des mots du code : mise en phase du découpage du flux transmis en mots de quatre symboles. Elle est assurée par le circuit à retard 28 qui commande le circuit 21 et plus particulièrement le signal apparaissant sur 26′. En effet, le flux binaire en ligne est continu. Quatre symboles successifs sont associés pour constituer le mot délivré par 27 : les symboles associés peuvent soit appartenir à deux mots successifs, soit au même mot (mise en phase du découpage en mots du flux binaire transmis). Dans le premier cas, certains mots formés correspondent à des mots interdits qui, par l'intermédiaire de 23 et 25, commandent le circuit 28 synchronisant le registre 27, faisant avancer le registre d'un temps élémentaire par l'horloge 21. Dans le deuxième cas, lorsque le découpage est correct, les mots reconstitués par le registre appartiennent tous à un alphabet du code et correspondent à un mot binaire décodé de trois symboles transmis par l'ensemble 22, 24 et 29 à la sortie SB. Il est bien évident que l'accroissement du nombre de mots interdits facilite la synchronisation. En l'absence de mots interdits, la mise en phase du découpage en mots de quatre symboles s'effectue par reconstitution dans l'organe de synchronisation 28 des états internes du codeur de la figure 10. Le signal sortant de 25 indique alors la somme courante du mot reçu ; 28 contrôle ainsi les sommes courante et alternée du flux reçu, aux instants de mise en phase, et fait en sorte que les bornes B et B′ ne soient pas dépassées.

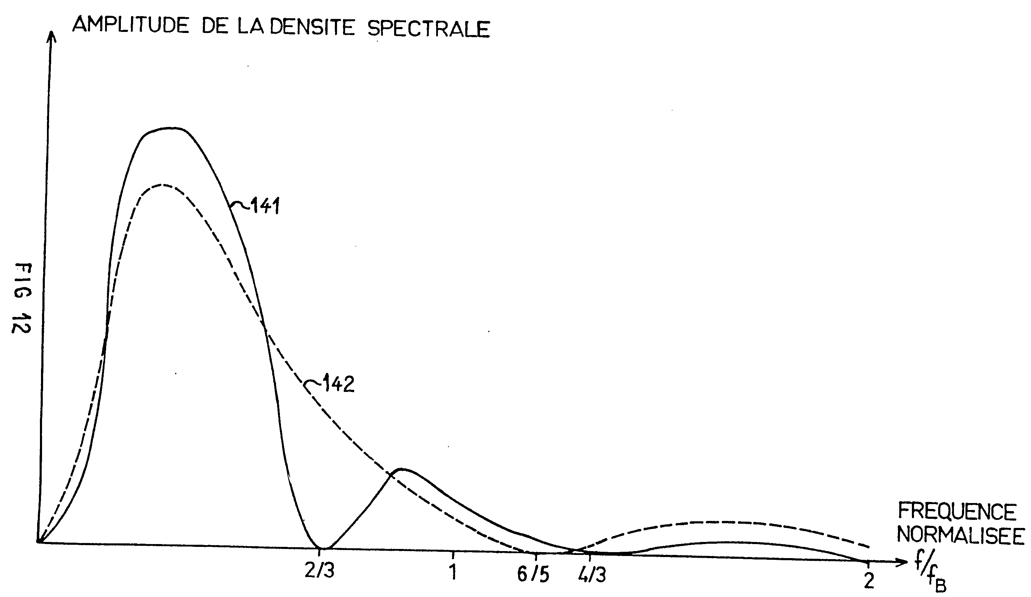

La figure 12 représente en 141 la répartition de la densité spectrale du code défini par les tableaux 7 et 8.

L'axe des abscisses est gradué en fréquence normalisée (rapport au rythme binaire du signal à coder). A titre de comparaison, on a représenté en 142 la densité spectrale correspondant au code 5B-6B utilisé notamment en transmission sur fibre optique. La figure fait clairement apparaître les avantages du code selon l'invention : densité plus élevée entre 0 et 2/3 — zéro d'énergie à 2/3, 4/3, etc. alors que le premier zéro du code 5B-6B se trouve à 6/5. L'examen de la courbe 141 montre que la largeur de bande allouée à la transmission des signaux codés selon l'invention peut, malgré l'augmentation du rythme, être limitée à la bande de fréquences normalisées 0-2/3. Dans ces conditions, une erreur sur le flux binaire de la ligne provoque en moyenne 1,443 erreur sur le flux binaire décodé. Ce code présente un rendement maximal puisque tous les mots du code sont utilisés. Les courbes correspondent à une équiprobabilité des deux symboles dans le flux à coder. Si on fait varier la probabilité des symboles binaires à l'entrée du codeur, on s'aperçoit que le spectre du code varie peu. Le code n'est donc que très peu sensible à la distribution du flux binaire et l'économie d'un organe de brouillage est possible dans un équipement où ce code est utilisé.

**0 024 236**

Ainsi qu'il est bien connu, lors de l'égalisation du flux reçu avant décodage, si les fréquences supérieures à la fréquence de ligne (donc ici les 4/3 de la fréquence binaire) sont coupées par un filtre dit de NYQUIST, « centré » sur une fréquence dite de NYQUIST, l'intermodulation intersymbole à l'instant d'échantillonnage est nulle. Or les filtres de NYQUIST ne sont pas réalisables et on ne peut que s'en approcher au prix d'une complication croissante du matériel. Dans le cas du codage selon l'invention, le code ne possède que très peu d'énergie autour de cette fréquence de NYQUIST. L'on pourra alors se contenter d'un filtre très simple ne s'approchant que très imparfaitement du filtre théorique de NYQUIST, mais qui n'apportera en fait que peu de dégradation sur le diagramme de l'œil du signal reçu à l'instant d'échantillonnage, du fait que, comme mentionné plus haut, il n'y a que très peu d'énergie autour de cette fréquence.

De façon analogue à ce qui a été décrit ci-dessus pour le code 3B/4B 4E 6S6 OM, il a été réalisé selon l'invention d'autres codes 3B/4B, tels que le code 3B/4B 4E 8S8 4M, différant du précédent par le nombre de mots interdits (4) et les sommes maximales (B = B' = 8) et le code 3B/4B 4E 8S8 2M, différant du précédent par le nombre de mots interdits.

En conclusion, le spectre de fréquence des codes selon l'invention, comme les codes le plus souvent utilisés, ne présente pas de composante continue. Il présente de plus une concentration de l'énergie entre la fréquence zéro et le premier zéro suivant, une concentration avant deux tiers de la fréquence binaire d'entrée, ce qui est un avantage sur les codes binaires antérieurs, même les plus économiques en largeur de bande. De plus, le spectre de fréquence des variantes préférées de code selon l'invention est relativement insensible à la distribution des symboles binaires dans l'information à transmettre.

Les avantages du transcodage selon l'invention qui peuvent s'ajouter à celui d'une répartition spectrale particulièrement favorable sont notamment les suivants :

— récupération du rythme facilitée par l'interdiction de suites infinies de symboles consécutifs égaux ;

— le coefficient multiplicatif d'erreur n'excède pas 1,5 et est inférieur à l'unité pour certaines variantes de l'invention (on rappelle que le coefficient multiplicatif d'erreur est le rapport nombre d'erreurs engendrées sur les mots binaires décodés sur nombre d'erreurs possibles sur les mots-code) ;

— possibilité de contrôle des erreurs et de détermination du taux d'erreur de la liaison par les méthodes classiques employées à cet effet pour les codes dont le codeur est une machine synchrone séquentielle à nombre fini d'états. Ces méthodes sont notamment décrites dans l'article : « Error detection and synchronization with pseudo-ternary codes for data transmission » rédigé par Mssrs. PREPARATA et BELLATO et publié dans la revue « Alta Frequenza » Juin 1973, page 280.

**Revendications**

1. Procédé de transcodage d'une information exprimée selon un premier code, à transmettre sur une voie de transmission selon un second code et comportant les phases suivantes :

au codage

— récupération du rythme de l'information exprimée selon le premier code ;
— élaboration d'un rythme correspondant au second code, dit « rythme de code » ;
— transformation du premier codage en second codage par le choix d'un parmi plusieurs alphabets susceptibles d'assurer une telle transformation, ce choix étant effectué en fonction de la valeur de la somme numérique qui doit rester bornée ;
— émission à une extrémité de la voie de transmission de l'information exprimée selon le second codage, au rythme de code ;

au décodage

— récupération du rythme de code à partir de l'information reçue ;
— élaboration du rythme correspondant au premier code ;
— découpage de l'information reçue en mots constitués d'un nombre prédéfini de symboles ;
— comparaison de ces mots avec un ensemble prédéfini de mots interdits ;
— mise en phase dudit découpage à partir de la comparaison précédente ;
— transformation du second codage en premier codage ;
ledit procédé étant caractérisé par le fait que, lors de la transformation du premier codage en second codage, le choix est effectué également en fonction de la valeur de la somme alternée, qui doit rester bornée.

2. Procédé selon la revendication 1, caractérisé par le fait que le premier code est un code binaire.

3. Procédé selon l'une des revendications précédentes, caractérisé par le fait que le nombre de mots interdits est compris entre zéro et quatre (limites comprises).

4. Procédé selon l'une des revendications précédentes, caractérisé par le fait que les valeurs maximales admises pour la somme numérique (B) et la somme alternée (B') sont chacune égales à 8.

5. Procédé selon l'une des revendications précédentes, caractérisé par le fait que le nombre d'alphabets est égal à quatre.

6. Procédé selon l'une des revendications précédentes, caractérisé par le fait que le rythme de code est le double du rythme correspondant au premier code, que l'information exprimée selon le premier code est constituée de mots d'un seul symbole binaire et que l'information exprimée selon le second code est constituée de mots de deux symboles ternaires, les valeurs maximales admises pour la somme numérique B et la somme alternée B' étant telles que B + B' ≤ 4.

7. Procédé selon l'une des revendications 1 à 5, caractérisé par le fait que l'information exprimée selon le premier code est constituée de mots de trois symboles binaires et que l'information exprimée selon le second code est constituée de mots de quatre symboles ternaires, les valeurs maximales admises pour la somme numérique et la somme alternée étant identiques et égales à 2.

8. Procédé selon l'une des revendications 1 à 5, caractérisé par le fait que l'information exprimée selon le premier code est constituée de mots de quatre symboles binaires et que l'information exprimée selon le second code est constituée de mots de quatre symboles ternaires, les valeurs maximales admises pour la somme numérique et la somme alternée étant identiques et égales à 3.

9. Procédé selon l'une des revendications 1 à 5, caractérisé par le fait que l'information exprimée selon le premier code est constituée de mots de cinq symboles binaires et que l'information exprimée selon le second code est constituée de mots de quatre symboles ternaires, les valeurs maximales admises pour la somme numérique et la somme alternée étant respectivement 8 et 5.

10. Procédé selon l'une des revendications 1 à 5, caractérisé par le fait que l'information exprimée selon le premier code est constituée de mots de trois symboles binaires et que l'information exprimée selon le second code est constituée de mots de quatre symboles binaires.

11. Procédé selon la revendication 10, caractérisé par le fait que les valeurs maximales admises pour la somme numérique et la somme alternée sont identiques et égales à 6.

12. Système de transmission d'information sur une ligne, comportant un module d'émission et un module de réception placés de part et d'autre de la ligne, caractérisé par le fait qu'il utilise le procédé selon l'une des revendications précédentes.

## Claims

1. A method for transcoding an information which is expressed according to a first code and which is transmitted on a transmission channel according to a second code, this method comprising the following steps :

during the coding operation

— retrieval of the rythm of the information which is expressed according to the first code ;
— elaboration of a rythm according to the second code, called « code rythm » ;
— transformation of the first code into the second code by chosing one out of several alphabets which are capable to ensure such a transformation, this choice being effected as a function of the value of the numerical sum which should remain limited ;
— emission of the information which is expressed according to the second code at the code rythm via one end of the transmission channel ;

during the decoding operation

— retrieval of the code rythm from the received information ;
— elaboration of the rythm corresponding to the first code ;
— cutting up the received information into words which are constituted by a predetermined number of symbols ;
— comparison of these words with a predetermined group of prohibited words ;
— phase adjustment of that cutting up as a result of the preceding comparison ;
— transformation of the second code into the first code, this method being characterized by the fact that during the transformation of the first code into the second code, the choice is additionnally effected in dependence of the value of the alternated sum which should remain limited.

2. A method according to claim 1, characterized in that the first code is a binary code.

3. A method according to one of the preceding claims, characterized in that the number of prohibited words is included between zero and four (borders included).

4. A method according to one of the preceding claims, characterized in that the maximum allowable values of the numerical sum (B) and the alternated sum (B') are each equal to 8.

5. A method according to one of the preceding claims, characterized in that the number of alphabets is equal to four.

6. A method according to one of the preceding claims, characterized in that the code rythm is twice the rythm corresponding to the first code, that the information which is expressed according to the first code is composed of words of only one binary symbol, and the information which is expressed according to the second code is composed of words of two ternary symbols, the maximum allowable values for the numerical sum B and the alternated sum B' being such that $B + B' \leqslant 4$.

7. A method according to one of the claims 1 to 5, characterized in that the information which is expressed according to the first code is composed of words of three binary symbols, and that the information which is expressed according to the second code is composed of words of four ternary symbols, the maximum allowable values for the numerical sum and the alternated sum being the same and equal to 2.

8. A method according to one of the claims 1 to 5, characterized in that the information which is expressed according to the first code is composed of words of four binary symbols, and that the information which is expressed according to the second code is composed of words of four ternary symbols, the maximum allowable values for the numerical sum and the alternated sum being the same and equal to 3.

9. A method according to one of the claims 1 to 5, characterized in that the information which is expressed according to the first code is composed of words of five binary symbols, and that the information which is expressed according to the second code is composed of words of four ternary symbols, the maximum allowable values for the numerical sum and the alternated sum being respectively 8 and 5.

10. A method according to one of the claims 1 to 5, characterized in that the information which is expressed according to the first code is composed of words of three binary symbols, and that the information which is expressed according to the second code is composed of words of four binary symbols.

11. A method according to claim 10, characterized in that the maximum allowable values for the numerical sum and the alternated sum are the same and equal to 6.

12. A system for the transmission of informations on a line comprising an emission module and a reception module which are placed on respective ends of the line, characterized in that it uses the method according to one of the preceding claims.

## Ansprüche

1. Verfahren zur Transkodierung einer in einem ersten Kode ausgedrückten Information zur Übertragung auf einem Übertragungskanal gemäß einem zweiten Kode, wobei das Verfahren folgende Phasen aufweist :

bei der Kodierung

— Taktgewinnung der gemäß dem ersten Kode ausgedrückten Information ;
— Erarbeitung des Taktes entsprechend dem zweiten Kode, « Kodetakt » genannt ;
— Umwandlung der ersten Kodierung in die zweite Kodierung durch Wahl eines von mehreren Alphabeten, die für eine solche Umwandlung geeignet sind, wobei diese Wahl abhängig vom Wert der zahlenmäßigen Summe erfolgt, die begrenzt bleiben soll ;
— Aussendung der nach der zweiten Kodierung notierten Information im Koderhythmus auf ein Ende des Übertragungskanals ;

bei der Dekodierung

— Wiedergewinnung des Koderhythmus aus der empfangenen Information ;
— Erarbeitung des dem ersten Kode entsprechenden Takts ;
— Aufteilung der empfangenen Information in Wörter, die aus einer vorgegebenen Anzahl von Symbolen bestehen ;
— Vergleich dieser Wörter mit einer vorbestimmten Gruppe von verbotenen Wörtern ;
— Einstellung der Aufteilungsphase aufgrund des vorhergegangenen Vergleichs ;
— Umwandlung der zweiten Kodierung in die erste Kodierung ;
wobei dieses Verfahren dadurch gekennzeichnet ist, daß während der Umwandlung der ersten Kodierung in die zweite Kodierung die Wahl außerdem abhängig vom Wert der alternierenden Summe erfolgt, die begrenzt bleiben soll.

2. Verfahren nach Anspruch 1, dadurch gekennzeichnet, daß der erste Kode ein Binärkode ist.

3. Verfahren nach einem der vorhergehenden Ansprüche, dadurch gekennzeichnet, daß die Anzahl der verbotenen Wörter zwischen null und vier liegt (Grenzen inbegriffen).

4. Verfahren nach einem der vorhergehenden Ansprüche, dadurch gekennzeichnet, daß die höchstzulässigen Werte für die zahlenmäßige Summe (B) und die alternierende Summe (B') je gleich 8 sind.

5. Verfahren nach einem der vorhergehenden Ansprüche, dadurch gekennzeichnet, daß die Anzahl der Alphabete gleich vier ist.

6. Verfahren nach einem der vorhergehenden Ansprüche, dadurch gekennzeichnet, daß der Kodetakt den doppelten Wert des dem ersten Kode entsprechenden Taktes besitzt, daß die nach dem ersten Kode ausgedrückte Information aus Wörtern eines einzigen Binärsymbols besteht und daß die nach dem zweiten Kode ausgedrückte Information aus Wörtern von zwei dreiwertigen Symbolen besteht, wobei die maximal zulässigen Werte für die zahlenmäßige Summe B und die alternierende Summe B' so gewählt sind, daß B + B' ≤ 4 ist.

7. Verfahren nach einem der Ansprüche 1 bis 5, dadurch gekennzeichnet, daß die gemäß dem ersten Kode ausgedrückte Information aus Wörtern von drei binären Symbolen besteht und daß die gemäß dem zweiten Kode ausgedrückte Information aus Wörtern von vier dreiwertigen Symbolen besteht, wobei die maximal zulässigen Werte für die zahlenmäßige Summe und die alternierende Summe gleich sind und den Wert 2 besitzen.

8. Verfahren nach einem der Ansprüche 1 bis 5, dadurch gekennzeichnet, daß die gemäß dem ersten Kode ausgedrückte Information aus Wörtern von vier Binärsymbolen besteht und daß die gemäß dem zweiten Kode ausgedrückte Information aus Wörtern von vier dreiwertigen Symbolen besteht, wobei die maximal zulässigen Werte für die zahlenmäßige Summe und die alternierende Summe gleich sind und den Wert 3 besitzen.

9. Verfahren nach einem der Ansprüche 1 bis 5, dadurch gekennzeichnet, daß die gemäß dem ersten Kode ausgedrückte Information aus Wörtern von fünf Binärsymbolen besteht und die gemäß dem zweiten Kode ausgedrückte Information aus Wörtern von vier dreiwertigen Symbolen besteht, wobei die maximal zulässigen Werte für die zahlenmäßige Summe und die alternierende Summe 8 bzw. 5 sind.

10. Verfahren nach einem der Ansprüche 1 bis 5, dadurch gekennzeichnet, daß die gemäß dem ersten Kode ausgedrückte Information aus Wörtern von drei Binärsymbolen und die gemäß dem zweiten Kode ausgedrückte Information aus Wörtern von vier Binärsymbolen besteht.

11. Verfahren nach Anspruch 10, dadurch gekennzeichnet, daß die maximal zulässigen Werte für die zahlenmäßige Summe und die alternierende Summe einander gleichen und den Wert 6 besitzen.

12. System zur Übertragung von Informationen auf einer Leitung mit einem Sendemodul und einem Empfangsmodul zu beiden Seiten der Leitung, dadurch gekennzeichnet, daß es das Verfahren nach einem der vorhergehenden Ansprüche benützt.

0  0  0  1  0  1  1  0  1  1  A

B

C

+
0  D
−

4
3
2  E
1

F

G

FIG. 1

DIAGRAMME DES TEMPS DU CODE 1B_2T/4E_3S1

FIG 2

0 024 236

FIG 3

3

AMPLITUDE DE LA DENSITE SPECTRALE

FIG 4

41

42

FREQUENCE

Fb    2Fb=FL

0 024 236

FIG 5

DIAGRAMME DES TEMPS DU CODE 1B_2T/4E_2S2_1M

FIG 6

DIAGRAMME DES TEMPS DU CODE 1B-2T/4E-2S2-3M

FIG **7**

DIAGRAMME DES TEMPS DU CODE 1B.2T/4E 2S2_2M

FIG 8

AMPLITUDE DE LA DENSITE SPECTRALE

FREQUENCE

2Fb = FL

Fb

O

51

52

53

FIG. 9

DIAGRAMME DES TEMPS DU CODE 3B-4B/4E-6S6-0M

FIG 10

FIG 11

AMPLITUDE DE LA DENSITE SPECTRALE

FIG 12

~141

~142

FREQUENCE
NORMALISEE

$f/f_B$

2/3    1    6/5   4/3    2

0 024 236